Europäisches Patentamt

European Patent Office

Office européen des brevets

(11) Publication number: **0 143 449**
**B1**

## (12) EUROPEAN PATENT SPECIFICATION

(45) Date of publication of patent specification: 25.07.90

(21) Application number: 84114188.0

(22) Date of filing: 23.11.84

(51) Int. Cl.⁵: **B 22 F 7/08, C 22 C 1/04,
F 16 C 33/12, B 22 F 7/04**

(54) Process for making composite bearing material and bearing material produced thereby.

(30) Priority: 28.11.83 US 555778

(43) Date of publication of application:
05.06.85 Bulletin 85/23

(45) Publication of the grant of the patent:
25.07.90 Bulletin 90/30

(84) Designated Contracting States:
AT BE CH DE FR GB IT LI LU NL SE

(56) References cited:
DE-A-1 696 116
DE-B-1 086 052
FR-A-2 309 335
US-A-2 226 263

(73) Proprietor: FEDERAL-MOGUL CORPORATION
2655 N.W. Highway
Southfield Michigan 48034 (US)

(72) Inventor: Lytwynec, Michael D.
10607 Lee Ann Drive
Brighton Michigan 48116 (US)

(74) Representative: Baillie, Iain Cameron et al
c/o Ladas & Parry Isartorplatz 5
D-8000 München 2 (DE)

Courier Press, Leamington Spa, England.

EP 0 143 449 B1

## Description

The present invention broadly relates to composite bearing materials which are comprised of a hard metal backing strip, such as steel, having a bearing lining composed of leaded bronze tenaciously bonded to at least one face surface thereof. Such composite bearing materials are eminently suitable and in widespread use for the fabrication of various bearing components for use in internal combustion engines, vehicle suspensions, transmission assemblies or the like.

Composite bearing materials of the foregoing general type have been produced by processes such as diclosed in our United States Patent No. 2,986,464 granted May 30, 1961 to Lewis et al and FR—A—2 309 335. This latter reference, FR—A—2 309 335, discloses a composite bearing material comprising a steel backing strip having a leaded-bronze bearing lining bonded to a face thereof said bearing lining containing about 8 percent to about 35 percent lead, up to about 10 percent tin and the balance essentially all copper. Further, this reference also discloses a process for making a composite bearing material comprising a steel backing strip having a leaded-bronze bearing lining bonded to a face thereof which is characterized by the steps of providing a steel backing strip, applying a layer of a prealloyed leaded-bronze powder on the surface of said backing strip, heating the prealloyed powder layer and said backing strip to a temperature of about (1450°F) 788°C to about (1600°F) 871°C in a non-oxidizing atmosphere for a period of time, cooling said layer and strip, compacting the cooled said layer and thereafter cooling the composite strip in a protective environment to a temperature below about (800°F) 425°C.

While the processes disclosed and the resultant composite bearing material produced in accordance with the processes described in the aforementioned references are eminently suitable for producing high quality composite bearing materials for the fabrication of various bearing components, less than optimum physical properties of the bearing lining and performance of the bearing components produced therefrom have been obtained due to the presence of relatively large-sized lead particles in the bearing lining. Attempts to overcome this problem by the direct casting of a molten leaded-bronze bearing alloy directly on a steel backing strip has been unsuccessful in overcoming this problem.

The present invention provides for an improved process and an improved composite bearing material produced thereby employing powder metallurgical techniques whereby a satisfactory tenacious bond is obtained between the bearing lining and the steel backing strip employing sintering conditions including time and temperature which inhibit the formation of large-sized lead particles thereby achieving a unique leaded-bronze lining characterized by an extremely fine-sized lead distribution dispersed uniformly throughout the bearing lining matrix.

In accordance with the product aspects of the present invention, a composite bearing material comprising a steel backing strip having a leaded-bronze bearing lining tenaciously bonded to at least one face thereof, said bearing lining containing about 8 percent to about 35 percent lead, up to about 10 percent tin and the balance essentially all copper, characterized in that said composite bearing material has a nickel-rich phase at the interface of the bond between said backing strip and said bearing lining, said bearing lining being substantially fully dense and having the lead constituent thereof substantially uniformly distributed throughout the lining matrix in the form of fine-sized particles at a frequency ranging from about 2,000 to about 3,100 per square millimeter.

The composite bearing material of the present invention is preferably made by the steps of providing a steel backing strip, initially applying a metal plating composed predominantly of nickel to at least one face of said backing strip, then applying a layer of a prealloyed leaded-bronze powder on the surface of said metal plating on said backing strip, heating the said powder layer and the metal plated backing strip to a temperature of about 788°C (1450°F) to about 871°C (1600°F) in a non-oxidizing atmosphere for a period of time no greater than sufficient to effect a liquid phase sintering of the powder and the formation of a bond between said powder layer and the metal plated face of said backing strip, thereafter cooling said composite strip to a temperature below about (300°F) 149°C, and after compacting the cooled layer reheating the compacted said layer and strip to a temperature of about 788°C (1450°F) to about 871°C (1600°F) to effect a further improvement in the physical properties of the compacted said layer and an increase in the strength of said bond between said layer and said face of said strip and cooling the composite strip in a protective environment to a temperature below about 425°C (800°F).

The resultant composite strip can subsequently be employed for fabrication of various bearing components and the outer face of the lining can be machined to final dimensions. It is further contemplated that the machined outer face of the bearing lining can be subjected to an overplate of a suitable bearing metal or metal alloy such as a lead-tin-copper bearing alloy containing up to about 90 percent by weight lead.

Additional benefits and advantages of the present invention will become apparent upon a reading of the Description of the Preferred Embodiments taken in conjunction with the specific examples provided.

The composite bearing material in accordance with a preferred practice of the present invention is comprised of a low-alloy steel such as SAE Type 1010 or 1020 generally having a thickness of from about 0.040 inch (0.98 mm) up to about 0.250 inch (6.35 mm). After appropriate preliminary cleaning steps to remove residual dirt, scale and oxide from the face surfaces of the steel strip, the strip is subjected to a plating operation to deposit a substantially uniform and continuous metal plating composed predominantly of nickel on the face surface thereof generally of a thickness of at least about .0010 mm (40 millionths of an inch) and preferably at least about .0015 mm (60 millionths of an inch). While thicknesses greater than about .0025 mm (100 millionths of an inch) can be employed, such greater thicknesses do not appear to provide any substantial benefits in the bond strength between the lining and the backing strip and the use of such greater thicknesses is undesirable for economic considerations.

The metal powder employed in forming the bearing lining by powder metallurgical techniques comprises a copper-lead-tin prealloyed powder which may generally contain from about 8 percent to about 35 percent lead, up to about 10 percent tin with the balance consisting essentially of copper. The use of the powder in a prealloyed form is important to achieve the unique distribution of the lead constituent in the final bearing lining. While it is preferred to employ prealloyed powders wherein each particle thereof is of the same composition as that of the final bearing lining desired, it is contemplated that prealloyed powders of alternative compositions can be mixed together to provide a resultant mixture corresponding to that of the final bearing lining. Typical of leaded-bronze alloys that can be satisfactorily employed in the practice of the present invention are SAE Grade 797, nominally composed of 80 percent copper, 10 percent lead, 10 percent tin; SAE Grade 798, nominally containing 88 percent copper, 8 percent lead and 4 percent tin; SAE Grade 799, nominally containing 73.5 percent copper, 23 percent lead and 3.5 percent tin; SAE Grade 49, nominally containing 75.5 percent copper, 24 percent lead and 0.5 percent tin; SAE Grade 480, nominally composed of 64.5 percent copper, 35 percent lead and 0.5 percent tin. Particularly satisfactory results have been obtained for heavy-duty bearing linings produced in accordance with the practice of the present invention employing prealloyed powders containing about 80.5 percent to about 83.5 percent copper, about 13 to 16 percent lead and about 3.5 percent tin.

The shape of the prealloyed powder particle is not critical although particles of a generally spherical configuration are preferred. The particle size of the prealloyed powder should be less than about 100 mesh (147 microns) with particle sizes ranging to as small as about 1 micron. In accordance with a preferred practice, the prealloyed metal powder contains particles distributed over the permissible size range with 50 percent thereof being less than 325 mesh (44 microns) whereby optimum loose powder packing density is achieved. The loose powder density as applied to the metal plated backing strip generally ranges from about 50 percent to about 60 percent of 100 percent theoretical density. The quantity of powder applied will vary depending upon the specific type of bearing component to be fabricated from the composite bearing material and generally will range from about 0.020 inch (0.5 mm) to about 0.070 inch (1.75 mm) whereby upon subsequent sintering and compaction, the final lining will range in thickness from about 0.010 inch (0.25 mm) to about 0.050 inch (1.25 mm).

The steel backing strip which is usually supplied in the form of a coil, is subjected to appropriate cleaning such as vapor degreasing, alkaline or acidic cleaning, wire brushing, acid pickling as may be required to remove surface soils and any rust and/or scale on the face surfaces thereof providing a typical pretreatment prior to the nickel electroplating step. The cleaned steel backing strip is thereafter subjected to a nickel electroplating operation wherein a metal plating composed predominately of nickel is applied to at least one face surface of the backing strip to which the bearing lining is subsequently to be applied. The electroplating step can be performed employing any one of a variety of electrolytes well known in the art including a typical Watts-type nickel plating bath to provide a metal plating of at least about .0010 mm (40 millionths of an inch) thick and preferably, about .0015 mm (60 millionths of an inch) or thicker. Metal platings substantially in excess of about .0025 mm (100 millionths of an inch) have been found not to appreciably affect the bond strength between the lining and backing strip and the use of metal platings of such greater thickness is generally unnecessary and undesirable because of economic considerations.

The resultant electroplated steel strip is advanced in a substantially horizontal position beneath a suitable feed hopper containing the prealloyed leaded-bronze powder which is applied in the form of a substantially uniform layer as controlled by a doctor knife or the like. The strip with the superimposed powder layer thereon thereafter enters a first sintering furnace provided with a nonoxidizing atmosphere which is heated to a temperature ranging from about 1450°F (788°C) up to about 1600°F (871°C). The nonoxidizing atmosphere preferably comprises a reducing atmosphere derived from the incomplete combustion of natural gas nominally containing about 12 percent hydrogen, 10 percent carbon monoxide and 5 percent carbon dioxide with the balance consisting essentially of nitrogen. The use of a reducing atmosphere provides the further advantage of reducing any oxides present on the surfaces of the powder particles and to prevent any further oxidation thereof at the elevated sintering temperatures encountered in the sintering furnace.

The specific temperature employed in the sintering furnace will vary somewhat depending upon the particular composition of the prealloyed powder and is adjusted to produce a sufficient liquid phase comprised predominantly of lead which effects a wetting of the powder particles and a filling of the interstices present in the powder layer in addition to a wetting of the surface of the nickel plating on the steel strip to promote the formation of a tenacious bond. Generally, sintering temperatures below about 1450°F (788°C) are unsatisfactory due to the failure to form an appreciable bond between the powder layer and the backing strip whereas temperatures in excess of about 1600°F (871°C) are also unsatisfactory due to the formation of an excessive amount of liquid phase. Preferably, the sintering temperature is controlled at about 1500°F (816°C) for a period of about 3 to about 5 minutes at the sintering temperature.

At the conclusion of the sintering operation, the composite strip exits from the sintering furnace and enters a suitable cooling section provided with a nonoxidizing protective atmosphere in which it is cooled to a temperature below about 300°F (149°C) whereafter the strip is compacted to substantially 100 percent of theoretical density to reduce any residual voids in the powder layer. The compaction can conveniently be achieved by passing the strip through a pair of compaction rolls.

Following the roll compaction step, the composite strip is again reheated in a furnace provided with a nonoxidizing, preferably, reducing atmosphere to a temperature within the same range as the first sintering temperature and preferably about 1500°F (816°C) for a total residence period of about 10 minutes including a preheating period to provide a sintering time at temperature of about 3 to about 5 minutes to effect a further enhancement of the bond between the bearing lining and the nickel plated steel backing strip and a further improvement in the physical characteristics of the bearing lining. Following the reheating or second sintering operation, the steel strip is cooled in a protective atmosphere, preferably by passing the strip through a molten lead bath at a temperature of about 800°F (421°C) which effects a further filling of any residual pores present in the bearing lining. Upon further cooling, preferably to a temperature within the range of about 300°F (149°C) to about 450°F (232°C), the cooled composite strip is subjected to a further final compaction, preferably a warm roll compaction step to provide for still further improvements in the properties of the composite strip and to effect a sizing and improved uniformity of the bearing lining thereon.

The resultant composite strip can thereafter readily be cooled and transferred to further fabricating operations to fabricate bearing components such as shell-type bearings, bushings, thrustwashers, and the like.

Following the bearing component fabrication step, the face of the bearing lining is usually subjected to a further final finishing operation to provide a precision bearing component. Optionally, and preferably, the machined bearing surface can be provided with an overplate of a suitable soft metal bearing lining of any of the types well known in the art. In accordance with a preferred practice of the present invention, the machined bearing face is electroplated to provide a nickel barrier layer on the lining surface of a thickness of at least about .00076 mm (30 millionths of an inch) whereafter a suitable overplate is applied at a thickness of about 0.0005 inch (0.0127 mm) to about 0.0015 inch (.0381 mm). A bearing alloy particularly suitable as an overplate nominally contains about 2 to about 4 percent copper, about 8 to about 12 percent tin with the balance consisting essentially of lead.

In accordance with the process as hereinbefore described, the bearing lining is characterized by the lead consitituent thereof being present in the form of extremely fine-sized particles substantially uniformly distributed throughout the lining matrix from the bearing face inwardly to the backing strip. The lead particles are further characterized as being of an average particle size typically less than about 8 microns distributed at a frequency ranging from about 2,000 to about 3,100 particles per square millimeter. The extremely fine size of the lead particles and their substantially uniform distribution throughout the lining matrix renders such linings eminently suitable for heavy duty-type bearing applications due to the improved physical properties of such bearing linings in comparison to conventional prior art bearing linings of similar alloy composition in which the lead particles are of substantially greater size and/or of nonuniform distribution. The fine-sized particles are achieved in accordance with the specific conditions employed in the sintering and reheating steps of the process which substantially inhibits an agglomeration of the lead constituent into undesirable larger particles in accordance with prior art practices.

In order to further illustrate the process of the present invention, the following specific examples are provided. It will be understood that the examples are provided for illustrative purposes and are not intended to be limiting of the scope of the present invention as herein defined and as set forth in the subjoined claims.

Example 1

A SAE type 1010 steel test strip 6 inches by 2 inches (15 cm by 5 cm) of 0.075 inch (1.9 mm) thick was cleaned by conventional procedures and was electroplated in a Watts-type nickel plating bath to produce a nickel plate of about 0.08 mils thick. A prealloyed leaded-bronze powder containing about 15 percent by weight lead, about 3 percent tin and the balance copper of an average particle size of about minus 100 mesh was applied to one face of the nickel plated test strip to a thickness of about 0.047 inch (1.19 mm) and the powder layer and strip were placed in a sintering furnace at about 1490°F (810°C) for a total residence time of about 10 minutes including a preheating period and a sintering period of about 3—5 minutes under an exothermic reducing atmosphere to effect a preliminary sintering of the powder layer. Thereafter, the strip was cooled to room temperature (70°F) (21°C) and densified by passing through a roll compactor to compact the powder layer to about 0.023 inch (0.58 mm). The compacted composite test strip was reheated in the same furnace to a temperature of about 1490°F (810°C) for an additional period of about 10 minutes including a preheating to temperature and final sinter at temperature of about 3 to about 5 minutes whereafter it was removed and coiled to room temperature.

A section of the composite strip was evaluated for bond strength of the lining to the backing strip and was found by test to be about 10,400 psi (730 kg cm²) bond-shear strength. A microscopic inspection of the cross-section of the lining revealed an extremely fine-sized and uniform distribution of the lead particles from the surface to the steel interface.

While it will be apparent that the preferred embodiments of the invention disclosed are well calculated to fulfill the objects above stated, it will be appreciated that the invention is susceptible to modification, variation and change without departing from the proper scope or fair meaning of the subjoined claims.

## Claims

1. A composite bearing material comprising a steel backing strip having a leaded-bronze bearing lining tenaciously bonded to at least one face thereof, said bearing lining containing about 8 percent to about 35 percent lead, up to about 10 percent tin and the balance essentially all copper, characterized in that said composite bearing material has a nickel-rich phase at the interface of the bond between said backing strip and said bearing lining, said bearing lining being substantially fully dense and having the lead constituent thereof substantially uniformly distributed throughout the lining matrix in the form of fine-sized particles at a frequency ranging from about 2,000 to about 3,100 per square millimeter.

2. The composite bearing material of claim 1, characterized in that said particles are of an average size less than about 8 microns.

3. A process for making the composite bearing material of claim 1 or 2 including the steps of providing a steel backing strip, initially applying a metal plating composed predominantly of nickel to at least one face of said backing strip, then applying a layer of prealloyed leaded-bronze powder on the surface of said metal plating on said backing strip, heating the said powder layer and the metal plated backing strip to a temperature of about 788°C (1450°F) to about 871°C (1600°F) in a non-oxidizing atmosphere for a period of time no greater than sufficient to effect a liquid phase sintering of the powder and the formation of a bond between said powder layer and the metal plated face of said backing strip, thereafter cooling said composite strip to a temperature below about (300°F) 149°C, and after compacting the cooled layer reheating the compacted said layer and strip to a temperature of about 788°C (1450°F) to about 871°C (1600°F) to effect a further improvement in the physical properties of the compacted said layer and an increase in the strength of said bond between said layer and said face of said strip and cooling the composite strip in a protective environment to a temperature below about 425°C (800°F).

4. The process of claim 3, characterized in that the step of heating the prealloyed powder is performed for a period of time of about 3 to about 5 minutes and preferably at a temperature of about 816°C (1500°F).

5. The process as in claim 3 or 4, characterized in that the step of reheating the compacted said layer is performed for a period of about 3 to 5 minutes and preferably at a temperature of about 816°C (1500°F) for a total reheat period of no more than about 10 minutes.

6. The process of any one of the preceding claims 3 to 5, characterized in that the step of cooling the composite strip is performed by passing said composite strip through a molten metallic bath containing lead.

7. The process of any of the preceding claims 3 to 6, characterized in that said metal plating is applied at an average thickness of at least about .0010 mm (40 millionths of an inch) and preferably to an average thickness of at least about .0015 mm (60 millionths of an inch).

8. The process of any of the preceding claims 3 to 7, characterized in that said metal plating comprises substantially pure nickel.

9. The process of any one of the preceding claims 3 to 8, characterized in that said prealloyed powder contains about 8 percent to about 35 percent lead, optionally about 13 to about 16% lead, up to about 10 percent tin, optionally about 3 to about 4 percent tin, and the balance essentially copper.

10. The process of any one of the preceding claims 3 to 9, characterized in that said prealloyed powder is of an average particle size less than about 147 microns with about 50 percent thereof optionally being of a particle size less than about 44 microns.

11. The process of any one of the preceding claims 3 to 10, characterized by the further step of subjecting the cooled composite strip to a second compaction at a temperature below about 421°C (800°F).

12. The process of claim 11, characterized in that said second compaction step is performed at a temperature of about 149°C (300°F) to about 232°C (450°F) and preferably is performed by roll compaction.

## Patentansprüche

1. Verbund-Lagermaterial umfassend einen Stahlunterlegstreifen mit einer verbleiten Bronze-Lagerauskleidung, die an mindestens eine Abßenfläche hievon fest gebunden ist, welche Lagerauskleidung etwa 8 bis etwa 35% Blei und bis zu etwa 10% Zinn enthält und der Rest im wesentlichen zur Gänza aus Kupfer besteht, dadurch gekennzeichnet, daß das Verbund-Lagermaterial eine nickelreiche Phase an der Grenzfläche der Bindung zwischen dem Unterlegstreifen und der Lagerauskleidung aufweist, welche Lagerauskleidung im wesentlichen völlig dicht ist, wobei ihr Bleibestandteil im wesentlichen gleichförmig durch die Auskleidungsmatrix in Form von Teilchen mit feiner Größe mit einer Frequenz von etwa 2000 bis etwa 3100 pro mm² verteilt ist.

2. Verbund-Lagermaterial nach Anspruch 1, dadurch gekennzeichnet, daß die Teilchen eine mittlere Größe von weniger als etwa 8 μm aufweisen.

3. Verfahren zum Herstellen des Verbund-Lagermaterials nach Anspruch 1 oder 2, das folgende Schritte umfaßt: Vorsehen eines Stahlunterlegstreifens, zunächst Aufbringen einer Metallplattierung bestehend hauptsächlich aus Nickel auf zumindest eine Außenfläche des Unterlegstreifens, danach Aufbringen einer Schicht eines vorlegierten verbleiten Bronzepulvers auf die Oberfläche dieser Metallplattierung auf dem Unterlegstreifen, Erhitzen der Pulverschicht und des metallplattierten Unterlegstreifens auf eine Temperatur von etwa 788°C (1450°F) bis etwa 871°C (1600°F) in einer nicht-oxidierenden Atmosphäre während eines Zeitraumes, der nicht länger ist als ausreichend, um das Sintern des Pulvers in flüssiger Phase und die Bildung einer Bindung zwischen der Pulverschicht und der metallplattierten Außenfläche des Unterlegstreifens zu bewirken, danach Abkühlen des Verbundstreifens auf eine Temperatur unterhalb etwa (300°F) 149°C und nach Kompaktieren der gekühlten Schicht Wiedererhitzen der kompaktierten Schicht und des Streifens auf eine Temperatur von etwa 788°C (1450°F) bis etwa 871°C (1600°F), um eine weitere Verbesserung der physikalischen Eigenschaften der kompaktierten Schicht und eine Erhöhung der Festigkeit der Bindung zwischen der Schicht und der Außenfläche des Streifens zu bewirken, und Abkühlen des Verbundstreifens in einer schützenden Umgebung auf eine Temperatur unterhalb etwa 425°C (800°F).

4. Verfahren nach Anspruch 3, dadurch gekennzeichnet, daß der Schritt der Erhitzens des vorlegierten Pulvers während eines Zeitraumes von etwa 3 bis etwa 5 Minuten und vorzugsweise bei einer Temperatur von etwa 816°C (1500°F) durchgeführt wird.

5. Verfahren nach Anspruch 3 oder 4, dadurch gekennzeichnet, daß der Schritt des Wiedererhitzens der kompaktierten Schicht während eines Zeitraumes von etwa 3 bis 5 Minuten und vorzugsweise bei einer Temperatur von etwa 816°C (1500°F) während eines Gesamtwiedererhitzungszeitraumes von nicht mehr als etwa 10 Minuten durchgeführt wird.

6. Verfahren nach einem der vorhergehenden Ansprüche 3 bis 5, dadurch gekennzeichnet, daß der Schritt des Abkühlens der Verbundstreifens dadurch bewirkt wird, daß der Verbundstreifen durch ein bleihaltiges Schmelzmetallbad geleitet wird.

7. Verfahren nach den vorhergehenden Ansprüchen 3 bis 6, dadurch gekennzeichnet, daß die Metallplattierung mit einer mittleren Dicke von mindestens etwa 0,0010 mm (40 Millionstel eines Zolls) und vorzugsweise mit einer mittleren Dicke von mindestens etwa 0,0015 mm (60 Millionstel eines Zolls) aufgebracht wird.

8. Verfahren nach einem der vorhergehenden Ansprüche 3 bis 7, dadurch gekennzeichnet, daß die Metallplattierung im wesentlichen reines Nikkel umfaßt.

9. Verfahren nach einem der vorhergehenden Ansprüche 3 bis 8, dadurch gekennzeichnet, daß das vorlegierte Pulver etwa 8 bis etwa 35% Blei, gegebenenfalls etwa 13 bis etwa 16% Blei und bis zu etwa 10% Zinn, gegebenenfalls etwa 3 bis etwa 4% Zinn, enthält und der Rest im wesentlichen Kupfer ist.

10. Verfahren nach einem der vorhergehenden Ansprüche 3 bis 9, dadurch gekennzeichnet, daß das vorlegierte Pulver eine mittlere Teilchengröße von weniger als etwa 147 μm aufweist, wobei etwa 50% hievon gegebenenfalls eine Teilchengröße von weniger als etwa 44 μm aufweisen.

11. Verfahren nach einem der vorhergehenden Ansprüche 3 bis 10, gekennzeichnet durch den weiteren Schritt, daß der abgekühlte Verbundstreifen einer zweiten Kompaktierung bei einer Temperatur unterhalb etwa 421°C (800°F) unterworfen wird.

12. Verfahren nach Anspruch 11, dadurch gekennzeichnet, daß der zweite Kompaktierungsschritt bei einer Temperatur von etwa 149°C (300°F) bis etwa 232°C (450°F) durchgeführt wird und vorzugsweise durch Pulverwalzen erfolgt.

**Revendications**

1. Matériau composite pour coussinet, comprenant une bande de support en acier, comportant une garniture d'appui en bronze au plomb, liée de manière tenace, sur au moins une face de celle-ci, cette garniture d'appui contenant d'environ 8 pour cent à environ 35 pour cent de plomb, jusqu'à environ 10 pour cent d'étain et le reste consistant presque totalement en cuivre, caractérisé en ce que le matériau composite pour coussinet, comporte une phase riche en nickel au niveau de l'interface de la liaison entre la bande de support et la garniture d'appui, cette garniture d'appui ayant une densité presque maximum, et son constituant à base de plomb étant presque uniformément réparti dans l'ensemble de la matrice de la garniture, sous la forme de fines particules, selon une densité d'environ 2000 à environ 3100 par mm².

2. Matériau composite pour coussinet selon la revendication 1, caractérisé en ce que lesdites particules, ont une taille moyenne inférieure à environ 8 microns.

3. Procédé de fabrication du matériau composite pour coussinet, selon la revendication 1 ou 2, dans lequel on prépare un bande de support en acier, on applique initialement un revêtement métallique comprenant principalement du nickel, sur au moins une face de la bande de support, on applique ensuite une couche d'une poudre de bronze au plomb préalablement allié, sur la surface de ce revêtement métallique déposé sur la bande de support, on chauffe cette couche de poudre et la bande de support revêtue de métal, à une température d'environ 788°C (1450°F) à environ 871°C (1600°F), dans une atmosphère oxydante pendant un temps non supérieur à celui qui est suffisant pour effectuer un frittage en phase liquide de la poudre, et la formation d'une liaison entre la couche de poudre et la face revêtue de métal de cette bande de support, on refroidit ensuite la bande composite à une température inférieure à environ 149°C (300°F), et après compactage de la couche refroidie, on réchauffe ensuite la couche compactée et la bande à une température d'environ 788°C (1450°F) à environ 871°C (1600°F), pour améliorer encore les propriétés physiques de la couche compactée, et accroître la résistance de la liaison entre la couche et la face de la bande, et on refroidit la bande composite dans un environnement protecteur à une température inférieure à environ 425°C (800°F).

4. Procédé selon la revendication 3, caractérisé en ce que l'opération de chauffage de la poudre préalablement alliée, est effectuée pendant une période d'environ 3 à environ 5 minutes, de préférence à une température d'environ 816°C (1500°F).

5. Procédé selon la revendication 3 ou 4, caractérisé en ce que l'opération de réchauffage de la couche compactée, est effectuée pendant environ 3 à 5 minutes, de préférence à une température d'environ 816°C (1500°F) pendant und période totale de réchauffage de pas plus d'environ 10 minutes.

6. Procédé selon l'une quelconque des revendications 3 à 5, caractérisé en ce que l'opération de refroidissement de la bande composite, est effectuée en faisant passer cette bande composite à travers un bain métallique en fusion contenant du plomb.

7. Procédé selon l'une quelconque des revendications 3 à 6, caractérisé en ce que le revêtement métallique est appliqué selon une épaisseur moyenne d'au moins environ 0,0010 mm (40 millièmes de pouce), de préférence selon une épaisseur moyenne d'au moins environ 0,0015 mm (60 millièmes de pouce).

8. Procédé selon l'une quelconque des revendications 3 à 7, caractérisé en ce que le revêtement métallique, comprend principalement du nickel pur.

9. Procédé selon l'une quelconque des revendications 3 à 8, caractérisé en ce que la poudre préalablement alliée, contient d'environ 8 pour cent à environ 35 pour cent de plomb, éventuellement d'environ 13 à environ 16 pour cent de plomb, jusqu'à environ 10 pour cent d'étain, éventuellement d'environ 3 à environ 4 pour cent d'étain, le reste consistant principalement en cuivre.

10. Procédé selon l'une quelconque des revendications 3 à 9, caractérisé en ce que la poudre préalablement alliée, a une taille particulaire moyenne, inférieure à environ 147 microns, environ 50 pour cent des particules ayant éventuellement une taille particulaire inférieure à environ 44 microns.

11. Procédé selon l'une quelconque des revendications 3 à 10, caractérisé en ce qu'on soumet en outre la bande composite refroidiè, à une deuxième opération de compactage à une température inférieure à environ 421°C (800°F).

12. Procédé selon la revendication 11, caractérisé en ce que cette deuxième opération de compactage, est effectuée à une température d'environ 149°C (300°F) à environ 232°C (450°F), et en ce qu'elle est de préférence effectuée par compactage entre des cylindres.